# EUROPEAN PATENT SPECIFICATION

(11) **EP 1 321 499 B1**
(45) Date of publication and mention of the grant of the patent: **21.03.2007**
(21) Application number: 02028416.2
(22) Date of filing: 18.12.2002
(51) Int. Cl.: C09K 3/10, C08L 9/02, F04B 27/10

(54) **Sealing material for use in seal member in compressor and compressor including the same**
Dichtungsmaterial zur Verwendung in Dichtelement für Kompressor und Kompressor enthaltend dasselbe
Matériau d'étanchéité pour utilisation dans un élément d'étanchéité d'un compresseur et compresseur l'incluant

(30) Priority: 19.12.2001 JP 2001386235; 26.04.2002 JP 2002126683
(43) Date of publication of application: 25.06.2003
(73) Proprietor: KABUSHIKI KAISHA TOYOTA JIDOSHOKKI, Kariya-shi, Aichi-ken (JP)
(72) Inventor: Osako, Masami, Kabushiki Kaisha Toyota Jidoshokki, Kariya-shi, Aichi-ken (JP); Yamada, Takeshi, Kabushiki K. Toyota Jidoshokki, Kariya-shi, Aichi-ken (JP); Kato, Takayuki, Kabushiki Kaisha Toyota Jidoshokki, Kariya-shi, Aichi-ken (JP)
(74) Representative: TBK-Patent

(56) References cited:
- FR-A- 1 327 105
- US-A- 4 725 637
- US-A- 4 990 570
- DATABASE WPI Section Ch, Week 200159 Derwent Publications Ltd., London, GB; Class A88, AN 2001-532729 XP002273838 & JP 2001 193843 A (MITSUBISHI CABLE IND LTD), 17 July 2001 (2001-07-17) -& PATENT ABSTRACTS OF JAPAN , 11 May 2001 (2001-05-11) & JP 2001 193843 A (MITSUBISHI CABLE)
- DATABASE WPI Section Ch, Week 199644 Derwent Publications Ltd., London, GB; Class A12, AN 1996-439679 XP002273839 & JP 08 217919 A (NOK CORP), 27 August 1996 (1996-08-27) -& PATENT ABSTRACTS OF JAPAN , 26 December 1996 (1996-12-26) & JP 08 217919 A (NOK CORP)

## Description

### BACKGROUND OF THE INVENTION

The present invention generally relates to sealing material for use in a seal member in a compressor that compresses refrigerant containing carbon dioxide gas.

In order to keep pressure and to seal refrigerant in an air conditioning system and in devices that are arranged in the air conditioning system, a seal member is used in a refrigerating machine. Acrylonitrile-butadiene rubber (NBR) series polymer (NBR or hydrogenated NBR) includes mainly NBR and is contained in sealing material for the seal member. NBR and hydrogenated NBR have excellent thermal resistance, oil resistance, water resistance and abrasion quality and is suitable for the sealing material.

NBR series polymer contains bound acrylonitrile. As bound acrylonitrile content is increased, gas permeability of NBR series polymer decreases and sealing performance of NBR series polymer improves. On the other hand, as bound acrylonitrile content is increased, the usability of NBR series polymer deteriorates at a relatively low temperature. As disclosed in Japanese Unexamined Patent Publication No. 8-217919, NBR series polymer contains low bound acrylonitrile content in a conventional sealing material. Although the above deterioration is generally suppressed due to the low bound acrylonitrile content, there is some limitation in improving the sealing performance of the conventional sealing material.

US-A-4725637 discloses sealant compositions comprising nitrile rubbers. A preferred nitrile rubber is butadiene-acrylonitrile copolymer having an acrylonitrile content of from 20 to 45% by weight.

JP-A-2001193843 discloses a rotating shaft seal for a car airconditioner, including a sealing unit made of hydrogenated nitrile rubber containing a polyzinc methacrylate.

FR-A-1327105 discloses compositions comprising butadiene-acrylonitrile copolymer having an acrylonitrile content of 39%, and ethylene-propylene copolymer. The compositions are used to ensure sealing.

The present invention provides a sealing material that has excellent sealing performance and thermal properties for use in the seal member in the compressor that compresses refrigerant including carbon dioxide gas, while the usability of the sealing material at a relatively low temperature is maintained.

### SUMMARY OF THE INVENTION

In accordance with the present invention, a sealing material is used in a seal member for the compressor that compresses refrigerant including carbon dioxide gas. The sealing material has a polymer mixture. The polymer mixture includes an acrylonitrile-butadiene rubber series polymer containing 49.2% or more by weight of bound acrylonitrile.

The present invention is applicable to a compressor. The compressor includes a housing, a rotary shaft and a compression mechanism. The rotary shaft is supported by the housing. The compression member is located in the housing for compressing refrigerant that contains carbon dioxide gas. The compression mechanism is driven by the rotary shaft. The compressor also has a seal member. The seal member is provided in the housing for sealing the refrigerant in the housing and has a sealing material. The sealing material includes a polymer mixture. The polymer mixture includes an acrylonitrile-butadiene rubber series polymer containing 49.2 % or more by weight of bound acrylonitrile.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG.1 is a cross sectional view of a variable displacement type compressor of a preferred embodiment according to the present invention;
FIG. 2 is a partially enlarged view of the shaft sealing mechanism shown in FIG. 1;
FIG. 3 shows compositions and physical test results of vulcanized products of examples 1 through 3 and comparative examples 1 and 2;
FIG. 4 shows a relationship between carbon dioxide gas permeability coefficients and bound acrylonitrile content contained in hydrogenated acrylonitrile-butadiene rubber (NBR); and
FIG. 5 is a graph showing relationships of compression set and carbon dioxide gas permeability coefficient with respect to weight percentage of ethylene-propylene-diene terpolymer rubber (EPDM) in polymer mixtures of the examples 1 through 3 and the comparative example 1.

### DETAILED DESCRIPTION OF THE PREFERRED EMBODIMENTS

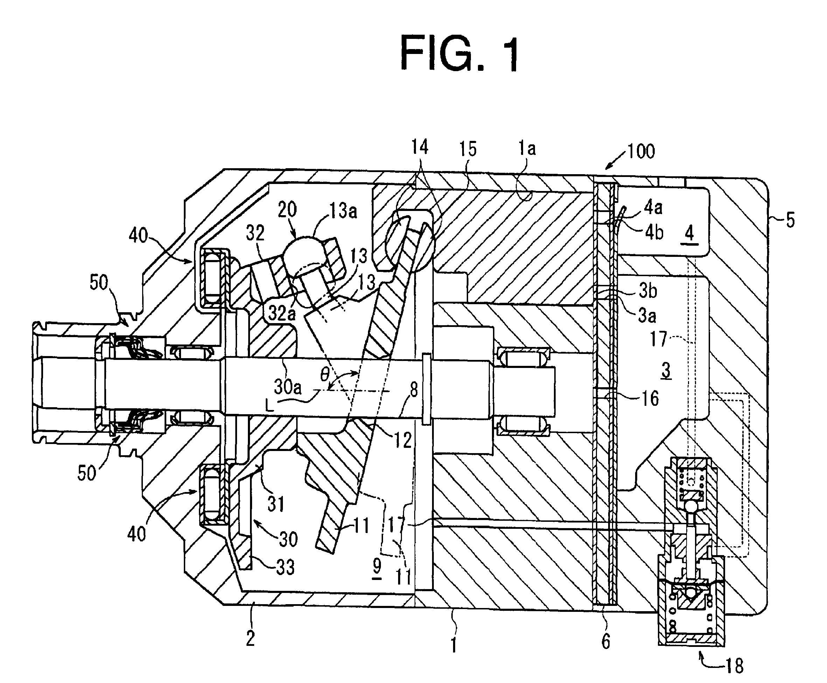

A sealing material according to a preferred embodiment of the present invention will be described by referring to FIGs. 1 through 5. In the present preferred embodiment, refrigerant seal will be described with respect to a shaft sealing mechanism for a variable displacement type compressor 100. In FIG. 1, the left side and the right side respectively correspond to the front side and the rear side.

As shown in FIG. 1, the compressor 100 includes a cylinder block 1, a front housing 2 and a rear housing 5. The front housing 2 is fixed to the front side of the cylinder block 1. The rear housing 5 is fixed to the rear side of the cylinder block 1. A valve plate assembly 6 is interposed between the rear housing 5 and the cylinder block 1. The rear housing 5 and the valve plate assembly 6 define a suction chamber 3 and a discharge chamber 4. Carbon dioxide refrigerant gas, which mainly contains carbon dioxide gas, is introduced into the suction chamber 3 and is compressed. The compressed carbon dioxide refrigerant gas is discharged into the discharge chamber 4. A suction port 3b is formed in the valve plate assembly 6 and interconnects the suction chamber 3 with a cylinder bore 1a that is formed in the cylinder block 1. A discharge port 4b is also formed in the valve plate assembly 6 and interconnects the discharge chamber 4 with the cylinder bore 1a. A bleed passage 16 is formed in the valve plate assembly 6 and interconnects the suction chamber 3 with a crank chamber 9 that is defined by the cylinder block 1 and the front housing 2.

A drive shaft 8 or a rotary shaft is inserted through the cylinder block 1 and the front housing 2. The drive shaft 8 is rotatably supported by the cylinder block 1 and the front housing 2 through bearing mechanisms that are arranged in the cylinder block 1 and the front housing 2. The drive shaft 8 is directly coupled to a vehicle engine without a clutch mechanism. Although the vehicle engine is not shown in FIG. 1, it functions as an external driving source. The drive shaft 8 is driven by the rotation of the vehicle engine. The rotation of the drive shaft 8 drives a compression mechanism including a piston 15 as will be described later.

A disc-shaped rotary swash plate 11 is accommodated in the crank chamber 9. A through hole 12 is formed substantially at the center of the swash plate 11. The drive shaft 8 is inserted through the shaft hole 12. A pair of pins 13 is fixed to the front side of the swash plate11. Each of the pins 13 has a substantially spherical portion 13a at its top end. A rotor 30 is secured to the drive shaft 8 and is integrally rotated with the drive shaft 8. The rotor 30 has a disc-shaped lug plate 31, a pair of support arms 32 and a balance weight 33. A through hole 30a is formed in the lug plate 31, and the drive shaft 8 is inserted through the through hole 30a.

The rotor 30 is connected with the swash plate 11 through a hinge mechanism 20. The support arms 32 of the rotor 30 respectively engage with the pins 13 on the side of the swash plate 11, thereby, constituting the hinge mechanism 20. Each of the support arms 32 has a support hole 32a whose shape corresponds to the spherical portion 13a of the pin 13. The spherical portion 13a is inserted into the support hole 32a. In this state, the support arm 32 supports the pin 13 while the pin 13 is slidable with respect to the support hole 32a. Therefore, while the support arm 32 engages with the pin 13, the hinge mechanism 20 transmits the rotating torque of the drive shaft 8 to the swash plate 11 and allows the swash plate 11 to incline with respect to a rotary axis L of the drive shaft 8. Namely, the swash plate 11 is slidable and inclinable with respect to the drive shaft 8.

A plurality of the cylinder bores 1a is circumferentially disposed in the cylinder block 1 at a regular interval. The piston 15 is slidably inserted into each of the cylinder bores 1a. Each of the pistons 15 is connected to the swash plate 11 through a pair of shoes 14 at the front side of the piston 15. Thereby, the rotational movement of the swash plate 11 is converted into the reciprocating movement of the piston 15 in the corresponding cylinder bore 1a while the swash plate 11 is rotated in accordance with the rotation of the drive shaft 8. In accordance with the reciprocating movement of the piston 15, the carbon dioxide refrigerant gas is introduced into the cylinder bores 1a from the suction chamber 3 and is compressed. The compressed carbon dioxide refrigerant gas is discharged from the cylinder bores 1a to the discharge chamber 4.

A thrust bearing 40 is interposed between the rotor 30 and the front housing 2 and is in contact with the front side of the lug plate 31 The front housing 2 receives compression reactive force, which is generated in compressing the carbon dioxide refrigerant gas by the piston 15. The compression reactive force travels through the piston 15, the shoes 14, the swash plate 11, the hinge mechanism 20 and the thrust bearing 40.

Displacement of the compressor 100 is determined by stroke of the piston 15 or a distance between the top dead center and the bottom dead center of the piston 15. The stroke of the piston 15 is determined by an inclination angle θ of the swash plate 11 with respect to the rotary axis L of the drive shaft 8. Namely, as the inclination angle θ of the swash plate 11 becomes large, the stroke of the piston 15 and the discharge amount of the carbon dioxide refrigerant gas also become large. On the other hand, as the inclination angle θ of the swash plate 11 becomes small, the stroke of the piston 15 and the discharge amount of the carbon dioxide refrigerant gas become small. The inclination angle θ of the swash plate 11 is determined by pressure differential between the cylinder bores 1a and the crank chamber 9. The above pressure differential is regulated by a displacement control valve 18. In FIG. 1, the inclination angle θ of the swash plate 11 is at the largest angle. Namely, in the above state, the displacement of the compressor 100 is the largest, and load on the compressor 100 is relatively high. In contrast, when the load on the compressor 100 is relatively low, the swash plate 11 is located at a position indicated by the two-dot chain line as shown in FIG. 1.

A supply passage 17 is formed in the cylinder block 1 and the rear housing 5 and connects the discharge chamber 4 with the crank chamber 9. The displacement control valve 18 is located on the supply passage 17. The displacement control valve 18 is an electromagnetic valve and adjusts the opening degree of the supply passage 17. The pressure in the crank chamber 9 is varied by adjusting the opening degree of the supply passage 17. Thereby, the pressure differential between the cylinder bores 1a and the crank chamber 9 is regulated. As a result, the inclination angle of the swash plate 11 is varied, and the stroke of the piston 15 is varied. Ultimately, the displacement of the compressor 100 is regulated. In the preferred embodiment, polyalkylene glycol (PAG) as a refrigerating machine oil is mixed with the carbon dioxide refrigerant gas. A shaft sealing mechanism 50 is located in the front housing 2 for sealing the drive shaft 8.

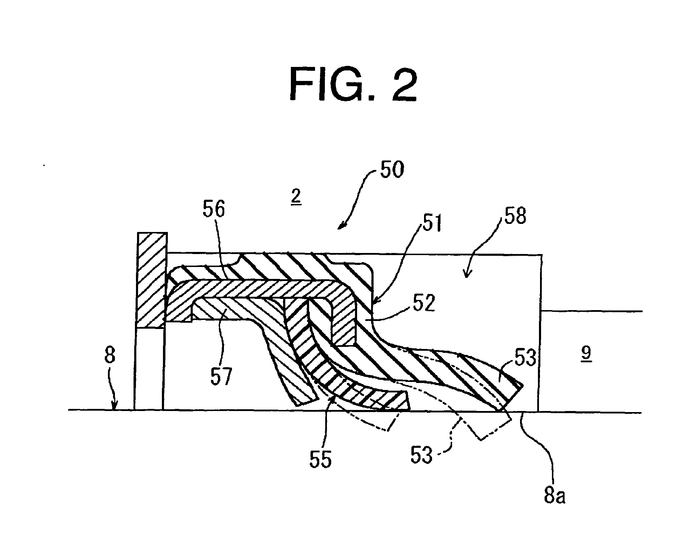

Now referring to FIG. 2, the shaft sealing mechanism 50 is interposed between the front housing 2 and the drive shaft 8. The shaft sealing mechanism 50 includes first and second lip seals 51 and 55 as well as first and second metal retainers 56 and 57. The first and second lip seals 51 and 55 are in contact with the circumferential surface 8a of the drive shaft 8. The first lip seal 51 is made of the sealing material mainly containing hydrogenated acrylonitrile-butadiene rubber (NBR) as will be further described later. The first lip seal 51 has a fixed portion 52 and a movable portion 53 that extends from the fixed portion 52. The second lip seal 55 is made of resin and is interposed between the first lip seal 51 and the second metal retainer 57. The first metal retainer 56 holds the first lip seal 51, and the second metal retainer 57 holds the second lip seal 55. A seal chamber 58 is formed between the front housing 2 and the drive shaft 8 at the outer circumferential surface side of the first lip seal 51 and communicates with the crank chamber 9. Therefore, the first lip seal 51 experiences the pressure in the crank chamber 9.

Before the shaft sealing mechanism 50 is mounted around the drive shaft 8 or the first and second lip seals 51 and 55 are placed against the circumferential surface 8a of the drive shaft 8, the first and second lip seals 51 and 55 have the shapes indicated by the two-dot chain line as shown in FIG. 2. After the shaft sealing mechanism 50 is mounted around the drive shaft 8, the first and second lip seals 51 and 55 are radially pressed by the circumferential surface 8a of the drive shaft 8 have the shapes indicated by the solid line as shown in FIG. 2. In the above-mounted state, elastic forces of the first and second lip seals 51 and 55 are applied to the circumferential surface 8a of the drive shaft 8. The above elastic force towards the circumferential surface 8a of the drive shaft 8 generates sealing function and prevents the carbon dioxide refrigerant gas from leaking from the crank chamber 9 to the outside of the compressor 100 along the circumferential surface 8a of the drive shaft 8.

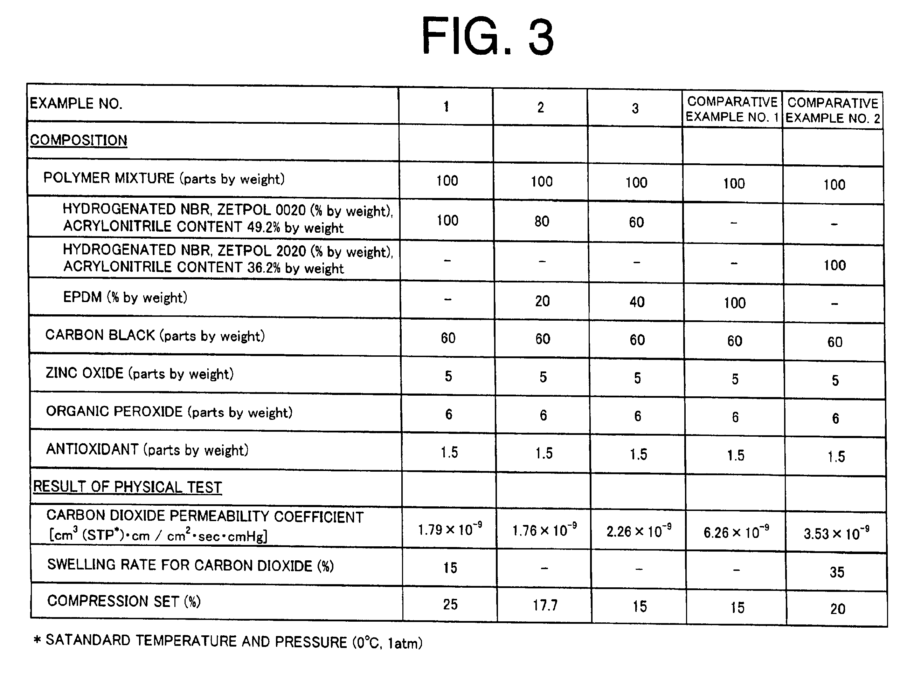

A vulcanized product is used as the sealing material for the first lip seal 51 for the compressor 100 according to the preferred embodiment of the present invention. The composition of the vulcanized product and the physical test results will be described by referring to FIGs. 3 through 5. The composition includes hydrogenated NBR that is one of acrylonitrile-butadiene rubber (NBR) series polymer, ethylene-propylene-diene terpolymer rubber (EPDM), carbon black as reinforcing inorganic filler, zinc oxide, organic peroxide, and antioxidant in examples 1 through 3 and comparative examples 1 and 2. Following ingredients are used respectively as the above mentioned ingredients:
(A-1) Hydrogenated NBR for examples 1 through 3 and comparative example 1: Zetpol 0020 (commercial name) commercially available from Nippon Zeon Co., Ltd., and having a bound acrylonitrile content of 49.2% and a specific gravity of 1.00;
(A-2) Hydrogenated NBR for comparative example 2: Zetpol 2020 (commercial name) commercially available from Nippon Zeon Co., Ltd., and having a bound acrylonitrile content of 36.2% and a specific gravity of 0.95;
(B) EPDM: ENB (commercial name) commercially available from Mitsui chemicals, inc.;
(C) Carbon black: High abrasion furnace (HAF) black N-330;
(D) Zinc oxide;
(E) Organic peroxide: Parkmill D (commercial name) commercially available from NOF corporation; and
(F) Antioxidant: Nocrak CD (commercial name) commercially available from Ouchi shinkokagaku Inc.

Hydrogenated NBR contains mainly NBR. EPDM is a polymer that a small amount of non-conjugated diene as cross-linking monomer is copolymerized with ethylene-propylene copolymer (EPM), and unsaturated bond is introduced into EPM. A proper amount of release agent, which is commonly used in acrylonitrile butadiene copolymer, is included in the compositions of the examples 1 through 3 and the comparative examples 1 and 2.

As shown in FIG. 3, a polymer mixture is composed of hydrogenated NBR and/or EPDM. The polymer mixtures of the examples 1 through 3 each include hydrogenated NBR containing a bound acrylonitrile content of 49.2% by weight. The compositions of the examples 1 through 3 each also include 60 parts by weight of carbon black, 5 parts by weight of zinc oxide, 6 parts by weight of organic peroxide and 1.5 parts by weight of antioxidant per 100 parts by weight of the polymer mixtures. Only the weight percentage of EPDM in the polymer mixture is different among the compositions of the examples 1 through 3. The polymer mixture of the example 1 includes only hydrogenated NBR, not EPDM. The polymer mixture of the example 2 includes 80% by weight of hydrogenated NBR and 20% by weight of EPDM. The polymer mixture of the example 3 includes 60% by weight of hydrogenated NBR and 40% by weight of EPDM. The polymer mixture of the comparative example 1 includes only EPDM. The composition of the comparative example 1 additionally includes 60 parts by weight of carbon black, 5 parts by weight of zinc oxide, 6 parts by weight of organic peroxide, and 1.5 parts by weight of antioxidant per 100 parts by weight of its polymer mixture. The polymer mixture of the comparative example 2 includes only hydrogenated NBR containing a bound acrylonitrile content of 36.2% by weight in its polymer mixture. The composition of the comparative example 2 additionally includes 60 parts by weight of carbon black, 5 parts by weight of zinc oxide, 6 parts by weight of organic peroxide, and 1.5 parts by weight of antioxidant per 100 parts by weight of its polymer mixture. The bound acrylonitrile content in hydrogenated NBR is only different between the compositions of the example 1 and the comparative example 2.

When a vulcanized product was formed from the compositions, the above mentioned ingredients were kneaded in 8-inch open roll mill at a temperature approximately between 80°C and 130°C. The mixture was press-cured at a temperature of 180°C for 6 minutes, and the vulcanized product was formed in a substantially square or circular shape at a thickness of approximately 0.5 mm. The vulcanized product was also produced by the above procedure from the compositions of the comparative examples 1 and 2.

The physical tests were carried out as follows on the vulcanized products of the examples 1 through 3 and the comparative examples 1 and 2 that are obtained by the above procedure.

### Carbon Dioxide Gas Permeability Coefficient

A circular sample having a diameter of 25 mm was prepared from each of the vulcanized products. The prepared sample was set in a measuring device for measuring high pressure gas permeability, and the carbon dioxide gas permeability coefficient was measured under a high pressure of 5MPa. Since the measuring device used in the above measurement is already known, the structural description of the measuring device is omitted. The carbon dioxide gas permeability coefficient was determined according to ASTM D1434.

### Swelling Rate For Carbon Dioxide Gas

Degree of swelling or swelling rate was measured after each of the vulcanized products was maintained under a predetermined condition of carbon dioxide gas at a temperature of 25°C under a pressure of 4 MPa for 70 hours.

### Compression Set

According to JIS K6301, the compression set was measured after each of the vulcanized products was maintained at a temperature of 150°C for 70 hours.

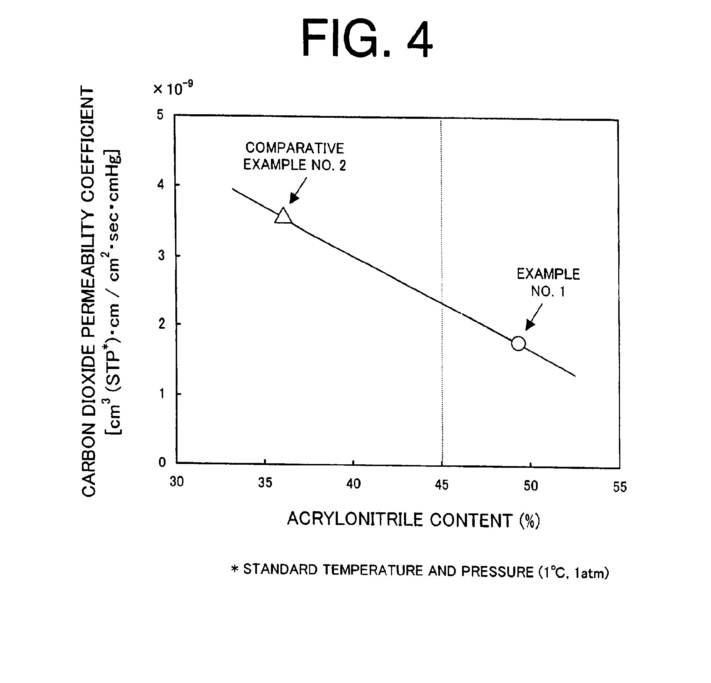

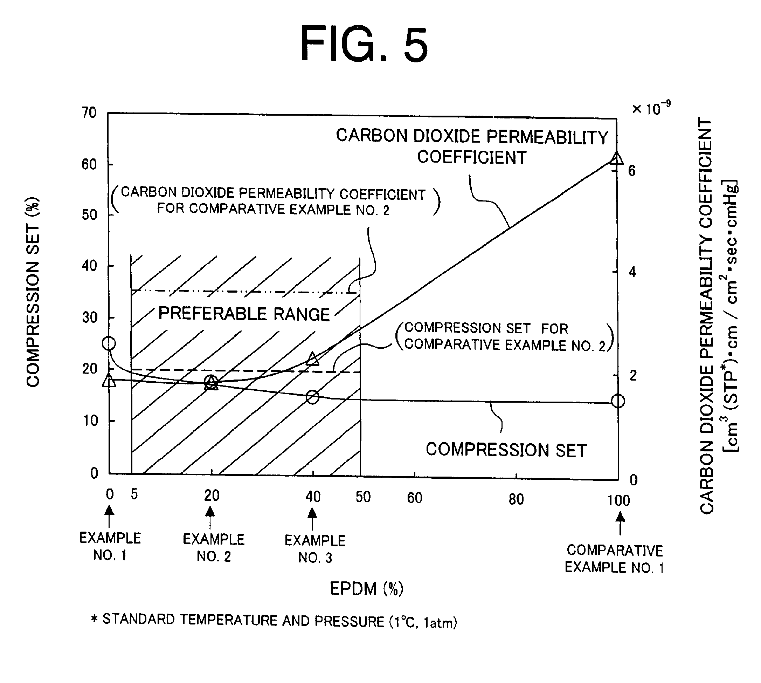

The carbon dioxide gas permeability coefficient, the swelling rate for carbon dioxide gas and the compression set were measured as mentioned above. As a result, the obtained results are commented on as follows. In FIGs. 3 through 5, as the carbon dioxide gas permeability coefficient becomes small, sealing performance for carbon dioxide gas is enhanced. In FIGs. 3 and 5, as the compression set becomes small, thermal properties are improved.
(1) As shown in FIGs. 3 and 4, the carbon dioxide gas permeability coefficient of a vulcanized product of the example 1 is 1.79 × 10⁻⁹cm³(STP) · cm / cm²· sec · cmHg and is half of that of the vulcanized product of the comparative example 2. Namely, the vulcanized product of the example 1 is better in sealing performance for carbon dioxide gas than that of the vulcanized product of the comparative example 2. STP means standard temperature and pressure.
(2) In FIG. 3, as the swelling rate becomes large, the usability of the vulcanized product becomes high at a relatively low temperature. As shown in FIG. 3, the swelling rate of the vulcanized product of the example 1 for carbon dioxide gas is 15% and is smaller than that of the vulcanized product of the comparative example 2 for carbon dioxide gas. In addition, when the swelling rate of the vulcanized products of the example 1 and the comparative example 2 for chloro-fluoro-carbon was also measured under a predetermined condition, the swelling rate of the vulcanized product of the comparative example 2 for chloro-fluoro-carbon is at the practical use level and is the substantially same as that of the vulcanized product of the example 1 for carbon dioxide gas. Therefore, the swelling rate of the vulcanized product of the example 1 for carbon dioxide gas is at the practical use level. Furthermore, although the swelling rate of the vulcanized product of the example 1 for chloro-fluoro-carbon is relatively low, the swelling rate of the vulcanized product of the example 1 for carbon dioxide gas is maintained at the practical use level due to carbon dioxide gas. As a result, although the usability of the vulcanized product of the example 1 at the relatively low temperature is not as high as that of the vulcanized product of the comparative example 2, the usability of the vulcanized product of the example 1 at the relatively low temperature is at the practical use level for carbon dioxide gas.
(3) In FIG. 5, as the compression set becomes small, thermal properties are improved. As shown in FIG. 5, as the weight percentage of EPDM in the polymer mixture is increased, the carbon dioxide gas permeability tends to increase and the compression set tends to slightly decrease. Namely, as the percentage weight of EPDM in the polymer mixture is increased, the sealing performance deteriorates and the thermal properties are improved. The carbon dioxide gas permeability coefficient of the vulcanized products of the examples 2 and 3 is respectively 1.76 × 10⁻⁹ and 2.26 × 10⁻⁹ cm³ (STP)· cm / cm² · sec · cmHg. The vulcanized products of the examples 2 and 3 have relatively excellent sealing performance for carbon dioxide gas. Furthermore, the vulcanized products of the examples 2 and 3 have the compression set respectively of 17.7% and 15% and have relatively excellent thermal properties. A preferable range of the weight percentage of EPDM is indicated by oblique lines in FIG. 5, and the weight percentage of EPDM in the examples 2 and 3 is in the preferable range. The carbon dioxide gas permeability coefficient in the above preferable range is lower than that of the vulcanized product of the comparative example 2, that is, 3.53 × 10⁻⁹ cm³ (STP) · cm / cm² · sec · cmHg. The compression set in the above preferable range is also lower than that of the vulcanized product in the comparative example 2, that is, 20%. Namely, the weight percentage of EPDM in the preferable range is from 5% to 50%. Therefore, when the polymer mixture contains 5% to 50% by weigh of EPDM, the sealing performance of the vulcanized product is substantially compatible with the thermal properties of the vulcanized product.

According to the preferred embodiment as mentioned above, it is confirmed that the vulcanized product of the example 1, which includes the hydrogenated NBR (NBR series polymer) containing the bound acrylonitrile of 49.2% by weight, has relatively excellent sealing performance for carbon dioxide gas and is practically usable at the relatively low temperature for carbon dioxide gas. It is also confirmed that the vulcanized products of the example 2 and 3 have relatively excellent sealing performance for carbon dioxide and thermal properties. Therefore, the vulcanized products of the examples 1 through 3 are suitably used as the sealing material for the first lip seal 51 in the compressor 100 that compresses the carbon dioxide refrigerant gas.

When the vulcanized product of the example 1 is used as the sealing material for the first lip seal 51, the first lip seal 51 performs relatively excellent sealing performance for carbon dioxide gas and is usable at the relatively low temperature for carbon dioxide gas. When the vulcanized product of the example 2 or 3 is used as the sealing material for the first lip seal 51, the first lip seal 51 performs relatively excellent sealing performance for carbon dioxide gas and has thermal properties. Since the vulcanized products of the examples 1 through 3 include hydrogenated NBR containing a relatively high bound acrylonitrile content, when the vulcanized products are used as sealing material, the sealing performance of the sealing material for the carbon dioxide refrigerant gas is improved. Therefore, the reliability and the durability of the compressor 100 and air conditioning system related to the compressor 100 are improved.

In the preferred embodiment, since the preferred embodiment according to the present invention is applied to the first lip seal 51, which is widely in contact with the carbon dioxide refrigerant gas, it is effective to obtain excellent sealing performance for the carbon dioxide refrigerant gas.

In a carbon dioxide gas refrigeration system including a compressor other than shaft seal part of the compressor, sealing performance for carbon dioxide gas is ensured by employing a metallic gasket or a gasket having rubber on its surface, or by sealing with metal such as welding. However, the above seal members cannot seal carbon dioxide gas at the shaft seal part of the compressor. When a lip seal made of the sealing material according to the present invention is adopted, the carbon dioxide gas is satisfactorily sealed at the shaft seal part of the compressor. Thereby, a required sealing performance of the carbon dioxide gas refrigeration system is ensured as a whole for carbon dioxide gas.

The present invention is not limited to the above mentioned preferred embodiment, and various applications and modifications are considered. Following alternative embodiments may be practiced by modifying from the above mentioned preferred embodiment.

Since it is easy to get hydrogenated NBR manufactured by Nippon Zeon Co., Ltd. that contains the bound acrylonitrile content of 49.2% by weight, the first lip seal 51 that includes hydrogenated NBR (NBR series polymer) containing the bound acrylonitrile content of 49.2% by weight is used in the above preferred embodiment.

In the examples 2 and 3 of the preferred embodiment, the weight percentage of EPDM is respectively 20% and 40% in the polymer mixture. However, the weight percentage of EPDM alternatively ranges from 5% to 50%, and the sealing performance is compatible with the thermal properties in the above range.

Non-reinforcing inorganic filler is alternatively included in the composition, and the vulcanized product from the composition is used as sealing material for a lip seal. In this case, the amount of the non-reinforcing inorganic filler is preferably 30 parts or less by weight per 100 parts of the polymer mixture. If the amount of the non-reinforcing inorganic filler is larger than 30 parts by weight per 100 parts of the polymer mixture, it is relatively hard to knead the ingredients, and the formation is impossible. Non-reinforcing inorganic filler is selected from Natural mica, talc and bituminous coal filler, alternatively, any combination of the above mentioned non-reinforcing inorganic fillers is also added as non-reinforcing inorganic filler. For natural mica, Repco Mica S-325 is commercially available from REPCO LTD. and has an average particle diameter of 10um or larger and an aspect ratio of 30 or over for the flake diameter to flake thickness. For bituminous coal filler, Austin Black 325 is commercially available from Coal Filler co.ltd. and has an average particle diameter of 6µm and a specific gravity of 1.32.

Although carbon black is included in the first lip seal 51 in the above mentioned preferred embodiment, white carbon is alternatively used instead of carbon black.

One of graphite, molybdenum disulfide powder, nickel powder and fiber such as carbon fiber is alternatively included in 50 parts or less by weight in the composition per 100 parts by weight of the polymer mixture. The vulcanized product becomes firmer so that the deformation becomes less. Thereby, the first lip seal 51 is deformed less by high pressure carbon dioxide gas, and sliding properties and abrasion resistance are improved. As a result, the reliability of the first lip seal 51 is improved.

Five to twenty parts by weight of plasticizer is substantially included in the composition per 100 parts by weight of the polymer mixture. Thereby, the usability of sealing material at the relatively low temperature is improved.

In the above mentioned preferred embodiment, EPDM is used as one of ethylene propylene copolymer rubber in the composition. Ethylene propylene copolymer rubber includes ethylene-propylene bipolymer rubber, ethylene-propylene-butene terpolymer rubber, ethylene-1-butene copolymer rubber, ethylene-propylene-1-butene-non-conjugated-diene copolymer rubber and ethylene-1-butene-non-conjugated-diene copolymer rubber.

In the above mentioned preferred embodiment, polyalkylene glycol (PAG) is mixed with the carbon dioxide refrigerant gas as the refrigerating machine oil. Polyol ester (POE) and polyvinyl ether (PVE) are alternatively used as the refrigerating machine oil.

In the above mentioned preferred embodiment, the present invention is applied to the first lip seal 51 in the shaft sealing mechanism 50 for sealing the drive shaft 8. The present invention is alternatively applied to a packing, an O-ring, a gasket and a valve seal in a compressor. For example, the O-ring is arranged between the cylinder block 1 and the front housing 2 and/or between the cylinder block 1 and the rear housing 5.

In the above mentioned preferred embodiment, the present invention is applied to the first lip seal 51 in the shaft sealing mechanism 50 for sealing the drive shaft 8. The present invention is also applied to the second lip seal 55.

In the above mentioned preferred embodiment, the present invention is applied to sealing material used in the variable displacement type compressor 100. The present invention is also applied to sealing material used for a compressor other than a variable displacement type compressor.

Any combination of the above described preferred embodiments and or the above described alternative embodiments is practiced according to the current invention. The present examples and embodiments are to be considered as illustrative and not restrictive, and the invention is not to be limited to the details given herein but may be modified within the scope of the appended claims.

A sealing material is used in a seal member for a compressor that compresses refrigerant including carbon dioxide gas. The sealing material has a polymer mixture. The polymer mixture includes an acrylonitrile-butadiene rubber series polymer containing 49.2 % or more by weight of bound acrylonitrile.

## Claims

1. A sealing material for use in a seal member in a compressor for compressing refrigerant that includes carbon dioxide gas, the sealing material comprising:
a polymer mixture including an acrylonitrile-butadiene rubber series polymer that contains 49.2% or more by weight of bound acrylonitrile.

2. The sealing material according to claim 1, wherein the polymer mixture includes the acrylonitrile-butadiene rubber series polymer in a content of 50% to 95% by weight while the rest of the polymer mixture further comprises ethylene-propylene copolymer rubber.

3. The sealing material according to claim 2, wherein the polymer mixture includes the acrylonitrile-butadiene rubber series polymer in a content of 60% to 80% while the rest of the polymer mixture is the ethylene-propylene copolymer rubber.

4. The sealing material according to any of claims 2 or 3, wherein the ethylene-propylene copolymer rubber includes one of ethylene-propylene-diene terpolymer rubber, ethylene-propylene bipolymer rubber, ethylene-propylene-1-butene terpolymer rubber, ethylene-1-butene bipolymer rubber, ethylene-propylene-1-butene-diene copolymer rubber and ethylene-1-butene-diene copolymer rubber.

5. The sealing material according to any of claims 1-4, wherein the sealing material is used in one of the seal member including a lip seal, a packing, an O-ring, a gasket and a valve seal.

6. The sealing material according to any of claims 1-4, further comprising 5 parts by weight of zinc oxide, 6 parts by weight of peroxide, 1.5 parts by weight of antioxidant and 60 parts by weight of one of carbon black and white carbon per 100 parts by weight of the polymer mixture.

7. The sealing material according to any of claims 1-4, further comprising 30 parts or less by weight of non-reinforcing inorganic filler per 100 parts by weight of the polymer mixture.

8. The sealing material according to any of claims 1-4, further comprising 50 parts or less by weight of one of fiber, graphite, molybdenum disulfide powder and nickel powder per 100 parts by weight of the polymer mixture.

9. The sealing material according to any of claims 1-4, further comprising 5 to 20 parts by weight of plasticizer per 100 parts by weight of the polymer mixture.

10. A compressor comprising;
a housing;
a rotary shaft supported by the housing;
a compression mechanism located in the housing for compressing refrigerant that contains carbon dioxide gas, the compression mechanism being driven by the rotary shaft;
a seal member provided in the housing for sealing the refrigerant in the housing, the seal member comprising:
a sealing material including a polymer mixture including an acrylonitrile-butadiene rubber series polymer containing 49.2% or more by weight of bound acrylonitrile.

11. The compressor according to claim 10, wherein the seal member constitutes a shaft sealing mechanism interposed between the housing and the rotary shaft for sealing between the housing and the rotary shaft.

12. The compressor according to claim 11, wherein the seal member is a lip seal.

13. The compressor according to claim 10, wherein the seal member is one of a lip seal, a packing, an O-ring, a gasket and a valve seal.

14. The compressor according to claim 10, wherein the polymer mixture includes the acrylonitrile-butadiene rubber series polymer in a content of 50% to 95% by weight while the rest of the polymer mixture further comprises ethylene propylene copolymer rubber.

## Patentansprüche

1. Dichtungsmaterial zur Verwendung in einem Dichtungselement in einem Kompressor zum Verdichten von Kühlflüssigkeit, welche Kohlendioxidgas enthält, wobei das Dichtungsmaterial enthält:
ein Polymergemisch mit einem Polymer des Typs des Acrylnitril-Butadien-Kautschuks, welches 49,2 oder mehr Gewichtsprozent an gebundenem Acrylnitril enthält.

2. Dichtungsmaterial nach Anspruch 1, wobei das Polymergemisch ein Polymer des Typs des Acrylnitril-Butadien-Kautschuks in einem Gehalt von 50 bis 95 Gewichtsprozent beinhaltet, während der Rest des Polymergemisches ferner Ethylen-Propylen-Copolymer-Kautschuk enthält.

3. Dichtungsmaterial nach Anspruch 2, wobei das Polymergemisch ein Polymer des Typs des Acrylnitril-Butadien-Kautschuks in einem Gehalt von 60% bis 80% enthält, während der Rest des Polymergemisches Ethylen-Propylen-Copolymer-Kautschuk ist.

4. Dichtungsmaterial nach einem der Ansprüche 2 oder 3, wobei der Ethylen-Propylen-Copolymer-Kautschuk einen von Ethylen-Propylen-Dien-Terpolymer-Kautschuk, Ethylen-Propylen-Bipolymer-Kautschuk, Ethylen-Propylen-1-Buten-Terpolymer-Kautschuk, Ethylen-1-Buten-Bipolymer-Kautschuk, Ethylen-Propylen-1-Buten-Dien-Copolymer-Kautschuk und Ethylen-1-Buten-Dien-Copolymer-Kautschuk enthält.

5. Dichtungsmaterial nach einem der Ansprüche 1-4, wobei das Dichtungsmaterial in einem der Dichtungselemente verwendet wird, welche eine Lippendichtung, einen Dichtungsring (packing), einen O-Ring, eine Flachdichtung und eine Ventildichtung beinhalten.

6. Dichtungsmaterial nach einem der Ansprüche 1-4, ferner mit 5 Gewichtsanteilen Zinkoxid, 6 Gewichtsanteilen Peroxid, 1,5 Gewichtsanteilen Antioxidationsmittel und 60 Gewichtsanteile von einem von Ruß (Carbon Black) und weißem Kohlenstoff pro 100 Gewichtsanteile des Polymergemisches.

7. Dichtungsmaterial nach einem der Ansprüche 1-4 ferner mit 30 oder weniger Gewichtsanteilen eines nicht versteifenden, anorganischen Füllstoffes pro 100 Gewichtsanteile des Polymergemisches.

8. Dichtungsmaterial nach einem der Ansprüche 1-4, ferner mit 50 oder weniger Gewichtsanteilen von einem von Faser, Graphit, Molybdändisulfidpulver und Nickelpulver pro 100 Gewichtsanteile des Polymergemisches.

9. Dichtungsmaterial nach einem der Ansprüche 1-4, ferner mit 5 bis 20 Gewichtsanteilen eines Weichmachers pro 100 Gewichtsanteile des Polymergemisches.

10. Ein Kompressor mit;
einem Gehäuse;
einer in dem Gehäuse abgestützten Drehwelle;
einer sich in dem Gehäuse befindenden Verdichtungsvorrichtung zum Verdichten von Kühlflüssigkeit, welche Kohlendioxidgas enthält, wobei die Verdichtungsvorrichtung durch die Drehwelle angetrieben ist;
einem in dem Gehäuse zum Abdichten der Kühlflüssigkeit im Gehäuse vorgesehenen Dichtungselement, wobei das Dichtungselement enthält:
ein Dichtungsmaterial mit einem Polymergemisch mit einem Polymer des Typs des Acrylnitril-Butadien-Kautschuks, welches 49,2 oder mehr Gewichtsprozent an gebundenem Acrylnitril enthält.

11. Kompressor nach Anspruch 10, wobei das Dichtungselement eine zwischen dem Gehäuse und der Drehwelle eingefügte Welledichtungsvorrichtung darstellt, um zwischen dem Gehäuse und der Drehwelle abzudichten.

12. Kompressor nach Anspruch 11, wobei das Dichtungselement eine Lippendichtung ist.

13. Kompressor nach Anspruch 10, wobei das Dichtungselement eines von einer Lippendichtung, einem Dichtungsring (packing), einem O-Ring, einer Flachdichtung und einer Ventildichtung ist.

14. Kompressor nach Anspruch 10, wobei das Polymergemisch ein Polymer des Typs des Acrylnitril-Butadien-Kautschuks in einem Gehalt von 50 bis 95 Gewichtsprozent enthält, während der Rest des Polymergemisches ferner Ethylen-Propylen-Copolymer-Kautschuk enthält.

## Revendications

1. Matériau d'étanchéité pouvant être utilisé dans un élément d'étanchéité d'un compresseur pour comprimer du réfrigérant qui comporte du dioxyde de carbone gazeux, le matériau d'étanchéité comprenant :
un mélange polymère comportant un polymère de série caoutchouc acrylonitrile-butadiène qui contient 49,2 % en poids ou plus d'acrylonitrile lié.

2. Matériau d'étanchéité selon la revendication 1, dans lequel le mélange polymère comporte le polymère de série caoutchouc acrylonitrile-butadiène à hauteur de 50 à 95 % en poids tandis que le reste du mélange polymère comprend en outre un caoutchouc copolymère d'éthylène-propylène.

3. Matériau d'étanchéité selon la revendication 2, dans lequel le mélange polymère comporte le polymère de série caoutchouc acrylonitrile-butadiène à hauteur de 60 % à 80 % tandis que le reste du mélange polymère est le caoutchouc copolymère éthylène-propylène.

4. Matériau d'étanchéité selon l'une quelconque des revendications 2 ou 3, dans lequel le caoutchouc copolymère d'éthylène-propylène comporte l'un des éléments suivants : caoutchouc terpolymère d'éthylène-propylène-diène, caoutchouc bipolymère d'éthylène-propylène, caoutchouc terpolymère d'éthylène-propylène-1-butène, caoutchouc bipolymère d'éthylène-1-butène, caoutchouc copolymère d'éthylène-propylène-1-butène-diène et caoutchouc copolymère d'éthylène-1-butène-diène.

5. Matériau d'étanchéité selon l'une quelconque des revendications 1 à 4, dans lequel le matériau d'étanchéité est utilisé dans l'un des éléments d'étanchéité, comprenant un joint à lèvre, une garniture , un joint torique d'étanchéité, un joint statique et un joint de soupape.

6. Matériau d'étanchéité selon l'une quelconque des revendications 1 à 4, comprenant en outre 5 parties en poids d'oxyde de zinc, 6 parties en poids de peroxyde, 1,5 partie en poids d'antioxydant et 60 parties en poids d'un élément parmi le noir de carbone et le carbone blanc pour 100 parties en poids du mélange polymère.

7. Matériau d'étanchéité selon l'une quelconque des revendications 1 à 4, comprenant en outre 30 parties en poids ou moins de charge inorganique sans renforcement pour 100 parties en poids du mélange polymère.

8. Matériau d'étanchéité selon l'une quelconque des revendications 1 à 4, comprenant en outre 50 parties en poids ou moins d'un élément parmi une fibre, le graphite, la poudre de disulfure de molybdène et la poudre de nickel pour 100 parties en poids du mélange polymère.

9. Matériau d'étanchéité selon l'une quelconque des revendications 1 à 4, comprenant en outre 5 à 20 parties en poids de plastifiant pour 100 parties en poids du mélange polymère.

10. Compresseur comprenant :
un boîtier ;
un arbre rotatif supporté par le boîtier ;
un mécanisme de compression situé dans le boîtier pour comprimer le réfrigérant qui contient du dioxyde de carbone gazeux, le mécanisme de compression étant entraîné par l'arbre rotatif ;
un élément d'étanchéité apporté dans le boîtier pour rendre étanche le réfrigérant dans le boîtier, l'élément d'étanchéité comprenant :
un matériau d'étanchéité comportant un mélange polymère comportant un polymère de série caoutchouc acrylonitrile-butadiène contenant 49,2 % ou en poids ou plus d'acrylonitrile lié.

11. Compresseur selon la revendication 10, dans lequel l'élément d'étanchéité constitue un mécanisme d'étanchéité d'arbre intercalé entre le boîtier et l'arbre rotatif pour assurer l'étanchéité entre le boîtier et l'arbre d'entraînement.

12. Compresseur selon la revendication 11, dans lequel l'élément d'étanchéité est un joint à lèvre.

13. Compresseur selon la revendication 10, dans lequel l'élément d'étanchéité est un élément parmi un joint à lèvre, une garniture, un joint torique d'étanchéité, un joint statique et un joint de soupape.

14. Compresseur selon la revendication 10, dans lequel le mélange polymère comporte le polymère de série caoutchouc acrylonitrile-butadiène à hauteur de 50 % à 95 % en poids tandis que le reste du mélange polymère comprend en outre un caoutchouc copolymère éthylène-propylène.
